# EUROPEAN PATENT SPECIFICATION

(11) **EP 2 967 085 B1**
(45) Date of publication and mention of the grant of the patent: **01.08.2018**
(21) Application number: 14721996.8
(22) Date of filing: 12.03.2014
(51) Int. Cl.: A21C 13/00, A21C 9/08

(54) **DOUGH PREPARATION ASSEMBLY**
TEIGZUBEREITUNGSANORDNUNG
ENSEMBLE DE PRÉPARATION DE PÂTE

(30) Priority: 14.03.2013 SI 201300058
(43) Date of publication of application: 20.01.2016
(73) Proprietor: GOSTOL-GOPAN d.o.o. Nova Gorica, 5000 Nova Gorica (SI)
(72) Inventor: BIZJAK, Edo, 5290 empeter pri Gorici (SI)
(74) Representative: Golmajer Zima, Marjanca
(86) International application number: PCT/SI2014/000014
(87) International publication number: WO 2014/142768

(56) References cited:
- DE-A1- 19 820 272
- GB-A- 233 761
- GB-A- 243 191

## Description

### Object of Invention

The object of the invention is an assembly for dough preparation in baking industry comprising dough mixing and fermentation devices and allowing for an optimal preparation of dough in terms of capacity per hour, duration of fermentation and quality of a final product.

### Technical Problem

The technical problem solved by the present invention is how to design a dough preparation assembly that will occupy as little space as possible, provide for a high level of process adaptability with respect to quantity, type of the final product, and modularity of the assembly, and will allow for a rapid, fully automated and controllable process.

### Prior Art

Dough preparation is a key phase in the production of baked goods and therefore considerably impacts the quality of a final product such as various sorts of bread and bakery goods.

A direct and an indirect method for dough preparation are known. In the first one, which is the most often used in the production of white bread, all ingredients - flour, water, salt and yeast - are simultaneously kneaded into a dough in a special container. The dough is left to rise for 20 to 80 minutes in the same container and then formed on special machines on the production line to various shapes of final products such as loafs and rolls, and baked. A major advantage of this method is shorter preparation time.

The indirect method is carried out in two steps. In the first step only part of flour, water and yeast is made into dough. The starter dough thus prepared, which is also called a pre-ferment or sourdough, ferments from 3 up to 16 hours. In the second step a main portion of dough is made from the remaining part of flour, water and other ingredients of a recipe (salt, sugar, etc.). To the main portion of dough the starter dough or sourdough is added in various amounts. The ratio between the starter dough and the main-portion dough may range from 5 % to 70 % of dough mass. Fermentation of the final dough takes about 90 minutes depending on the recipe.

By using this method, better final products are obtained that have better flavour, aroma and texture and remain fresh for a longer period of time.

Nowadays, consumers have a growing demand for aromatic, tasteful and durable bakery goods which is practically unachievable by using a direct method of dough preparation; therefore the indirect method is gaining importance.

A longer period of time and a more demanding technology are needed for dough preparation by this method. Fermentation times of the starter dough are relatively longer, preferably ranging from 3 to 5 hours, and hour output capacities are huge in huge bakeries, therefore a considerable number of fermentation containers are needed which require an adequate depositing area. Moreover, the containers need to be displaced from a starter dough mixing station to a fermentation station, then from a dough mixing station to the fermentation station and finally to a station where the dough is discharged into a funnel of a dividing machine. In fact, this is a huge operation in terms of logistics. The method must be carried out in a precisely defined sequence of times; otherwise differences appear in the duration of fermentation which negatively impacts the quality of final products. In the event when several sorts of bread which have a special recipe each are prepared simultaneously, we almost come across insurmountable difficulties.

To do away with said difficulties, a need for a more automated method has emerged.

There are several more or less automated plants for the indirect method for dough preparation. All share a common characteristic: they have a separate part for the first step, i. e. a system for the preparation of starter dough, and a part for the second step, i. e. a system for preparation of the final dough.

Continuous systems are plants with a circle-shaped transport assembly, on which containers for starter dough or dough fermentation are arranged and transported. Preparation of the final dough is carried out after tact in a separate part, wherein usually four containers and two mixers are symmetrically arranged in said circle. These systems are not optimal as they occupy a large area due to a transport assembly and several additional devices. They are not adaptable and their installation calls for high investment costs.

There are also the so-called linear systems for the indirect preparation of dough, in which both mixers (for starter dough and dough) and all containers are arranged along a straight line, on which a manipulator moves. The line can be fastened to a specially designed steel structure or can be arranged on the ground in the form of rails. The manipulator follows the technological method and transports the containers between a station for dosing ingredients, a station for mixing starter dough and dough until fermentation stations. An essential feature is that the system allows changing or adapting the time of fermentation of starter dough and dough.

Patent application DE 198 20 272 A1 (Boku Maschinenfabrik GmbH) discloses one of more advanced variants of a linear plant for dough preparation. This is a compact and fully automated system that allows for considerable adaptability and speed of the dough preparation method. It consists of various machines and devices that provide for mixing, kneading, rising and dividing of dough, and of special transport and manipulation devices. The system is based on a rack structure, in the centre of which a special transport device moves, whereas both sides of the line are provided with container receiving boxes arranged on the support frame in a maximum of two levels. The transport device is an assembly consisting of a carriage, lifting devices and gripping arms. The carriage is intended for a linear movement along the line, the lifting device allows for lifting and dropping of containers and the gripping arms perform horizontal movement via special parallelogram mechanism, by means of which a container is taken out of the box. Said device comprises various mechanisms, drives, transmissions and gears and is as such very complex, which is reflected in its high price, and what's more, there appears a problem of availability since failure probability of such device is quite high.

The transport device, i. e. the carriage, the lifting device and the gripping arms are positioned by means of positioning drives with a reducing gear, said positioning drives being provided with incremental rotational transducers intended to determine revolutions of the drive and with special position fixing brakes. The whole system is controlled by a dedicated control device.

Installation of a plant of this type into a new baking facility requires good planning of production capacities, since the capacities are a decisive factor for the size of the plant (especially the number of containers) and for the area it occupies. A subsequent increase of capacity can be done in two ways: by extending the line or by heightening the support structure. Both result in an increased number of boxes for the placement of containers. The design of the lifting device needs a considerable height and the height of the plant can amount to a maximum of two storeys. This may pose problems in new buildings and even bigger problems are encountered in existing buildings. Since the system alone requires a large area, a possibility of its expansion in existing buildings is very limited.

It emanates from the above that a system of this type has quite a few drawbacks, of which huge space requirement, complexity and inadaptability are the ones to highlight.

### Solution to the Technical Problem

The described technical problem is solved by an assembly of the invention consisting of a device for fermentation, a device for weighing and dosing ingredients, a mixer for starter dough or dough, a tipper with or without a transport rail, and containers. The devices of the dough preparation assembly are arranged in a way that the centre of each container received by said devices during the dough preparation method lies on a circle.

A predominant part of the circle/circular arc is filled by the fermentation device made up of depositing areas for fermentation arranged continuously one next to the other, on which areas containers are arranged, wherein each placement area is preferably occupied by only one container. The device for fermentation is formed in such a way that the centre of the container, when arranged on a placement area of the device for fermentation, lies on the circle. The remaining parts of the circle/circular arc are filled by other dough preparation devices, such as at least one device for weighing and dosing of ingredients, at least one mixer for starter dough, at least one mixer for dough, at least one tipper with or without a rail, etc., which are not the object of the invention.

In the centre of the circle a four-axial robot is arranged. During a dough preparation method, the robot grabs and transfers the containers between the station for dosing weighed ingredients, the station for mixing, the station for fermentation of starter dough and dough on placement areas, and the station for emptying or the station for dividing dough. Based on the needs (capacity of the line per hour, desired fermentation times), the placement areas of the fermentation device can be arranged in a section of the circle/circular arc of any width and in several planes of the same circle/circular arc.

The essence of the assembly lies in the fact that it occupies the same area, the shapes of a circle having a constant radius, regardless of the number of dough preparation devices arranged in the assembly. So, if capacities are increased, placement areas are simply added on the circle, wherewith the circular arc is extended; if need may be also in height or in several planes.

In this way best possible modularity and the related adaptability of the assembly is achieved.

The invention will be explained in more detail in the continuation by way of an embodiment and enclosed drawings, where:

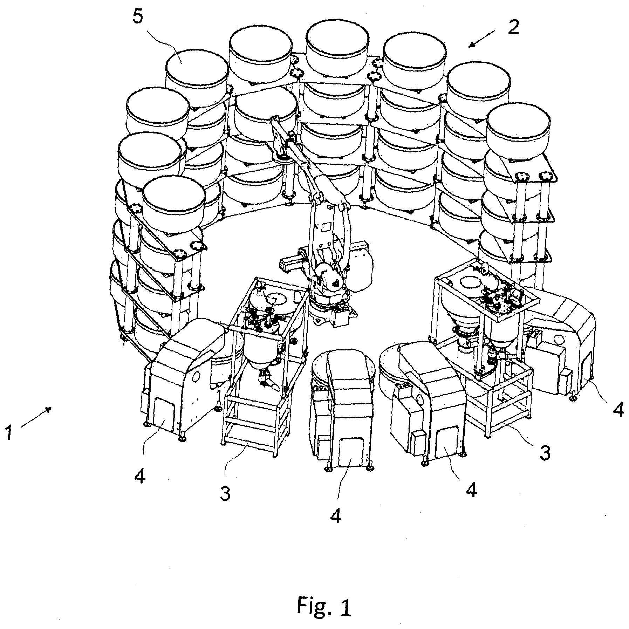

Figure 1: shows a dough preparation assembly in isometry

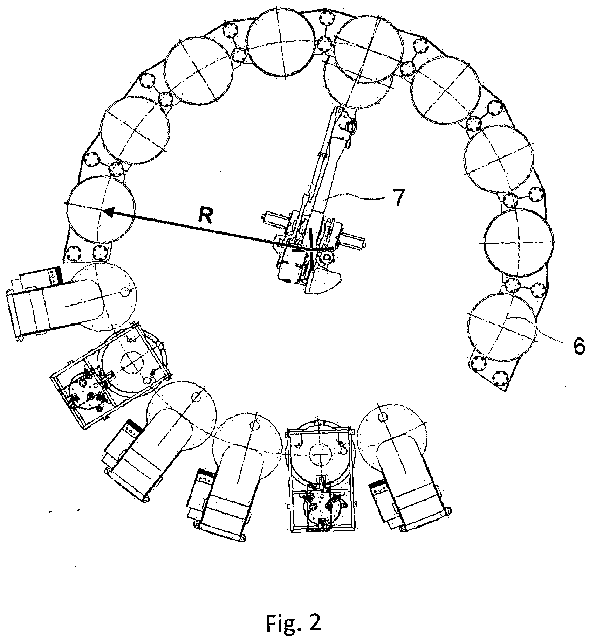

Figure 2: shows a dough preparation assembly in a plan view

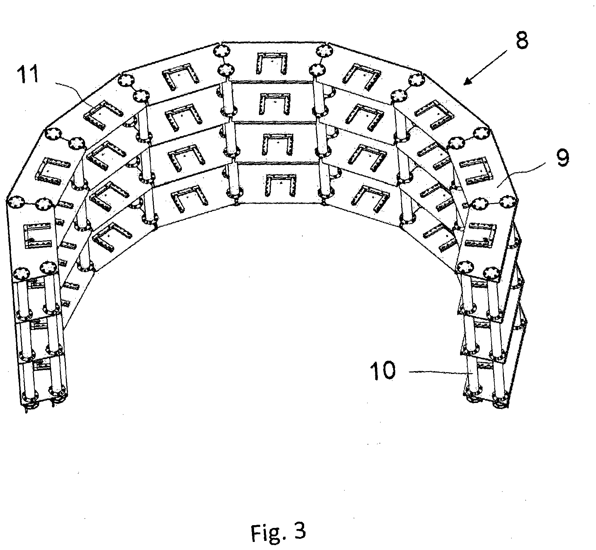

Figure 3: shows a fermentation device.

A dough preparation assembly 1 is formed of a fermentation device 2, a device 3 for weighing and dosing ingredients, a mixer 4 for starter dough or dough, a tipper with or without a rail, wherein each of the fermentation device 2, the device 3 for weighing and dosing ingredients, the mixer 4 for starter dough or dough, the tipper with or without a rail is arranged in such a manner that receives a container 5 in such a way that the centre of each container 5 lies on a circle 6 with a radius R, in the centre of which a robot 7 is arranged. The devices of the dough preparation assembly 1 on the circle can be arranged as desired and adapted to each method or any needs.

The fermentation device 2 is embodied as a rack structure 8 imitating the shape of a part of the circle 6 or the circular arc. The rack structure 8 is therefore comprised of panels 9 preferably having the shape of an isosceles trapezoid. The panels are arranged continuously next to each other, with the shorter baseline facing towards the centre of the circular arc. The rack structure 8 or panels 9 can be arranged on the same circular arc in several planes by spacer elements 10 preferably equidistantly. These elements are provided at both ends with flanges which in conjunction with corresponding boreholes on the panels 9 and clamping means allow for mutual fastening of the panels 9 and spacer elements 10 and of the entire rack structure 8.

Each panel 9 is optionally provided in its geometrical centre by a limit stop 11 protecting the container 5 against tilting.

The robot 7 arranged in the centre of the circle 6 is preferably of a four-axial design provided at its longer end with a special gripper for gripping containers 5. If the rack structure 8 is implemented in several planes, the robot 7 can be arranged on a stand.

The rack structure 8 consisting of panels 9 and spacer elements 10 is of modular design. This means it can be simply and optionally upgraded with panels 9 and spacer elements 10 or the same can be removed from it. The panels 9 and spacer elements 10 are made from a material of adequate strength, preferably from a metallic material.

## Claims

1. A dough preparation assembly comprising a fermentation device **(2),** a device **(3)** for weighing and dosing ingredients, a mixer **(4)** for starter dough or dough, a tipper with or without a rail, containers **(5)**, and a robot for transferring the containers during a dough preparation method **characterized in that** each of the fermentation device **(2),** the device **(3)** for weighing and dosing ingredients, the mixer **(4)** for starter dough or dough, and the tipper with or without a rail is arranged to receive a container (5) in such a way that the centre of each container **(5)** lies on a circle **(6)** with a radius R and wherein said robot is arranged in the centre of the circle (6).

2. Dough preparation assembly according to Claim 1 **characterized in that** the fermentation device **(2)** is embodied as a rack structure **(8)** imitating the shape of a part of the circle **(6)** or the circular arc.

3. Dough preparation assembly according to Claim 2 **characterized in that** the rack structure **(8)** is comprised of panels **(9)** preferably having the shape of an isosceles trapezoid.

4. Dough preparation assembly according to Claim 3 **characterized in that** the panels **(9)** of the rack structure **(8)** are arranged on the same circular arc in several planes by spacer elements **(10)** preferably equidistantly.

5. Dough preparation assembly according to Claims 2, 3 or 4 **characterized in that** the rack structure **(8)** is of a modular design.

6. Dough preparation assembly according to Claim 4 **characterized in that** the individual panels **(9)** and the spacer elements **(10)** are made from a metallic material.

## Patentansprüche

1. Teigzubereitungsanordnung, umfassend eine Fermentationsvorrichtung (**2**), eine Vorrichtung (**3**) zum Abwiegen und Dosieren von Zutaten, einen Mischer (**4**) für Starterteig oder Teig, einen Kipper mit oder ohne Schiene, Behälter (**5**) und einen Roboter zur Überführung der Behälter während eines Teigzubereitungsverfahrens, **dadurch gekennzeichnet, dass** die Fermentationsvorrichtung (**2**), die Vorrichtung (**3**) zum Abwiegen und Dosieren von Zutaten, der Mischer (**4**) für Starterteig oder Teig und der Kipper mit oder ohne Schiene jeweils zur Aufnahme eines Behälters (**5**) angeordnet sind, derart, dass die Mitte jedes Behälters (**5**) auf einem Kreis (**6**) mit einem Radius R liegt und wobei der Roboter in der Mitte des Kreises (**6**) angeordnet ist.

2. Teigzubereitungsanordnung nach Anspruch 1, **dadurch gekennzeichnet, dass** die Fermentationsvorrichtung (**2**) als Gestellkonstruktion (**8**) ausgeführt ist, die die Form eines Teils des Kreises (**6**) oder des Kreisbogens imitiert.

3. Teigzubereitungsanordnung nach Anspruch 2, **dadurch gekennzeichnet, dass** die Gestellkonstruktion (**8**) aus Platten (**9**) besteht, die vorzugsweise die Form eines gleichschenkligen Trapezes aufweisen.

4. Teigzubereitungsanordnung nach Anspruch 3, **dadurch gekennzeichnet, dass** die Platten (**9**) der Gestellkonstruktion (**8**) auf demselben Kreisbogen in mehreren Ebenen durch Abstandselemente (**10**) vorzugsweise im gleichen Abstand angeordnet sind.

5. Teigzubereitungsanordnung nach Anspruch 2, 3 oder 4, **dadurch gekennzeichnet, dass** die Gestellkonstruktion (**8**) ein modulares Design aufweist.

6. Teigzubereitungsanordnung nach Anspruch 6, **dadurch gekennzeichnet, dass** die einzelnen Platten (**9**) und die Abstandselemente (**10**) aus einem metallischen Material gefertigt sind.

## Revendications

1. Dispositif de préparation de pâte, comprenant un dispositif de fermentation (2), un dispositif (3) pour peser et doser des ingrédients, un mélangeur (4) pour une pâte de départ ou pour une pâte, un basculeur avec ou sans rail, et des récipients (5), et un robot pour transférer les récipients pendant un procédé de préparation de pâte, **caractérisé en ce que** chacun parmi le dispositif de fermentation (2), le dispositif (3) pour peser et doser des ingrédients, le mélangeur (4) pour une pâte de départ ou pour une pâte, le basculeur avec ou sans rail est agencé de manière à recevoir un récipient (5) de telle sorte que le centre de chaque récipient (5) soit situé sur un cercle (6) présentant un rayon R, et dans lequel ledit robot est agencé au centre du cercle (6).

2. Ensemble de préparation de pâte selon la revendication 1, **caractérisé en ce que** le dispositif de fermentation (2) est incorporé comme une structure de râtelier (8) qui imite la forme d'une partie du cercle (6) ou l'arc circulaire.

3. Ensemble de préparation de : pâte selon la revendication 2, **caractérisé en ce que** la structure de râtelier (8) est constituée de panneaux (9) qui ont de préférence la forme d'un trapézoïde isocèle.

4. Ensemble de préparation de pâte selon la revendication 3, **caractérisé en ce que** les panneaux (9) de la structure de râtelier (8) sont agencés sur le même arc circulaire dans différents plans par des éléments d'écartement (10) de préférence de façon équidistante.

5. Ensemble de préparation de pâte selon la revendication 2, 3 ou 4, **caractérisé en ce que** la structure de râtelier (8) est une structure de conception modulaire.

6. Ensemble de préparation de pâte selon la revendication 4, **caractérisé en ce que** les panneaux individuels (9) et les éléments d'écartement (10) sont constitués d'un matériau métallique.
